# EUROPEAN PATENT APPLICATION

(11) **EP 2 103 420 A2**
(43) Date of publication of application: **23.09.2009**
(21) Application number: 09155392.5
(22) Date of filing: 17.03.2009
(51) Int. Cl.: B29D 31/508, B29D 31/51, B29D 31/512, B29D 31/515, B29D 31/518

(54) **Molding process and apparatus**

(30) Priority: 19.03.2008 US 77444
(71) Applicant: Vertex L.L.C., Lenexa, KS 66219-1375 (US)
(72) Inventor: Marc, Michel, Lenexa, KS 66219 (US)
(74) Representative: Modiano, Micaela Nadia

(57) **Abstract**

An apparatus and associated method of making a molded article including providing a mold that defines a mold cavity having a predetermined profile. A rubber base material is in the mold cavity. The rubber base material is constructed and arranged to have a profiles that substantially matches the profile of the mold cavity. An adhesive film is disposed over the rubber base material. Energy is applied across the mold so as to heat and vulcanize the rubber base material while concurrently adhering the adhesive film to the rubber base material.

## Description

### Technical Field

The present invention relates in general to a molding process and related apparatus and pertains, more particularly, to an improved method and associated apparatus particularly adapted for making rubber soles for boots or shoes.

### Description of Related Art

One flow molding apparatus known in the art for making plastic parts comprises a top electrode and a bottom electrode with top and bottom molds disposed therebetween. The top and bottom molds define a molding cavity in which a plastic material may be placed. Preferably, the current field lines are perpendicular to the plastic material at all points along its surface to thereby provide a uniform temperature throughout the material. In addition, the top and bottom electrodes substantially match the configuration of the plastic part that is being fabricated such that the distance between the electrodes is constant in order to provide uniform heating of the plastic material. In operation, an alternating electric field is applied across the molding cavity to thereby form the plastic part. An example of this type of a flow molding apparatus is disclosed in U.S. Pat. No. 4,268,238 (which is incorporated herein by reference).

Another flow molding apparatus known in the art for making plastic parts comprises a top electrode and a bottom electrode with a mold disposed therebetween. The mold has a non-uniform thickness so as to allow the molding of a non-uniform plastic part from a plastic material placed between the mold and the top electrode. In order to provide uniform heating throughout the plastic material, a constant capacitance is maintained throughout all of the different thickness sections of the plastic part. This may be accomplished by equalizing the relative dielectric constants between the plastic material and the mold, preferably by altering the relative dielectric constant of the mold via the use of additives. Alternatively, the capacitance may be equalized by modifying the spacing between the top and bottom electrodes in the different thickness sections of the plastic part. An example of this type of a flow molding apparatus is disclosed in U.S. Pat. No. 4,441,876 (which is incorporated herein by reference).

Another flow molding apparatus known in the art for making foamed plastic parts comprises a top electrode and a bottom electrode with a mold disposed therebetween. A plastic foam material may be placed in a cavity of the mold and then compressed during the heating cycle. After the heat is terminated, the compressed plastic foam material is permitted to expand as it cools so as to conform to the shape of the mold and thereby form the foamed plastic part. An example of this type of a flow molding apparatus is disclosed in U.S. Pat. No. 4,524,037 (which is incorporated herein by reference).

Yet another flow molding apparatus known in the art for making foamed plastic parts comprises a top electrode and a bottom electrode with a two-piece mold disposed therebetween. The mold supports a diaphragm such that a plastic foam material may be placed between the diaphragm and the bottom mold. A fluid is injected into the mold above the diaphragm so as to initially deflect the diaphragm and thus expel substantially all of the air from the mold. The fluid is then extracted from the mold during the heating cycle, which causes a vacuum in the mold to thereby assist in the expansion of the plastic foam material. An example of this type of an apparatus is disclosed in U.S. Pat. No. 4,851,167 (which is incorporated herein by reference).

Another molding process is used for making a molded article from two or more different formable materials having different molding temperatures and a single heating or molding cycle. An example of this type of an apparatus is disclosed in U.S. Pat. Publication No. 2006/0012083 (which is incorporated herein by reference). Also incorporated by reference in its entirety is US Publication No. 2006/0012082.

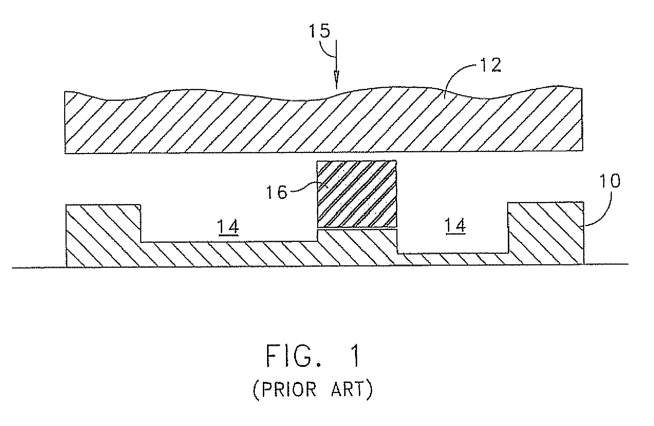

There is also schematically illustrated in FIG. 1 a present technology for the molding of a rubber bottom sole. FIG. 1 schematically illustrates separate mold parts 10 and 12 that define therebetween a mold cavity 14. This technology relies upon a heated mold in conjunction with a hydraulic press for forcing the two mold parts together. A block 16, referred to as a "hockey puck," is disposed within the mold and is constructed of a raw rubber material. The volume of the block 16 is selected to correspond to the final bottom sole volume. The formation of the bottom sole is defined by the contour of the mold. Usually, the block 16 is disposed approximately at the center of the mold cavity. The mold parts 10 and 12 are metal mold pieces that are heated as part of the process.

In this prior technology the mold is mounted in a hydraulic press (not shown) for applying a pressure in the direction of arrow 15 illustrated in FIG. 1. The hydraulic press closes with a relatively high pressure pushing on the rubber block 16 and thus, with heat, forcing it to grow in area pushing the air out and forming the final shape of the sole corresponding to the closed contour of the mold.

The process also includes a heating of the mold. In the metal heated mold illustrated in FIG. 1 the mold is typically heated and maintained to a temperature in a range of 320□F to 350□F. Several hundred psi (pounds per square inch) are used to conform the rubber block to the mold contour. With this molding process only one piece, or at the most a pair, can be produced at one time and the cycle time is typically between 8 and 18 minutes. Thus, with this prior art process it takes approximately 8 to 18 minutes to produce one pair of soles.

In the shoe industry, it is common to provide a foamed mid-sole that is placed on top of the rubber bottom sole. The mid-sole is typically formed of polyurethane, polyethylene, or EVA (ethylene vinyl acetate) foams. It has been found quite difficult to bond those mid-soles to the rubber bottom sole. For military applications for boots, there is a request for a pull test where the bond between the mid-sole and the bottom sole has to exceed 100 pounds. Adhesive films do exist that bond suitably to the mid-sole but they do not bond well to the vulcanized rubber.

In the prior art shown in FIG. 1 it is difficult to place an adhesive film on top of the block 16 prior to the curing as during the molding process the film tends to stick to the rubber, be stretched and break, thus not providing a uniform adhesive layer. In other words in some places there would be too much adhesive film while in other places there would be none and as a matter of fact most of the adhesive material would be within the thickness of the bottom sole and not on the top where it has to be so that a proper bond is provided. Thus, there is a need in the art for an improved molding process particularly for a rubber sole construction.

### Summary of the Invention

In accordance with the present invention there is provided a method of making a molded article, preferably for making a shoe or boot bottom sole. The mold may be considered as a two part mold that defines a mold cavity therebetween. The method includes positioning a rubber base material in the mold cavity. The rubber base material is constructed and arranged to substantially match the profile of the mold cavity. An adhesive film is formed over the rubber base material. Energy is applied across the mold so as to heat and vulcanize the rubber base material while concurrently adhering the adhesive film to the rubber base material. Thus, in accordance with the present invention, rather than providing a single centrally disposed block of raw rubber material in the mold, the rubber material is formed to conform to the size and shape of the mold cavity. The rubber material preferably covers substantially the entire bottom side of the mold cavity. The rubber base material may be formed either in a single matching profile or may be formed by multiple sheets stacked one on the other to provide the same basic profile. The energy that is applied to the mold may be RF energy applied between respective electrodes or the mold may be a metal mold and the energy is applied by heating the metal mold to vulcanize the rubber base material. There may also be provided a foam mid-sole material over the adhesive film with a blowing agent so that the foam material fills the mold cavity. In one embodiment practiced herein, a bladder may be used over the foam mid-sole material, closing the bladder against the foam material and enabling the bladder to move against the mold as the foam material expands.

In accordance with another aspect of the present invention there is described a method of attaching a shoe or boot upper to a sole construction by using a mold having a mold cavity. This method includes positioning a rubber base material in the bottom of the mold cavity where the rubber base material has an adhesive film attached thereto and providing an upper rubber layer attached to the shoe or boot upper and also having an upper rubber layer having adhesive firm attached thereto. The respective films may be considered as defining therebetween a cavity pocket. The final step is injecting a foam material into the cavity pocket so as to form the mid-sole. A polyurethane foam may be injected into the cavity pocket.

In accordance with still another aspect of the present invention there is provided an apparatus for molding an article in which the mold includes separate mold parts that define therebetween a mold cavity. A pair of electrodes is provided, one associated with each of the mold parts. An RF source is coupled to the electrodes to provide RF energy across the mold cavity. A rubber base material is disposed in the mold cavity with the rubber base material being constructed and arranged to substantially match the profile of the mold cavity. An adhesive film is disposed over the rubber base material. The application of the RF energy across the mold heats and vulcanizes the rubber base material while concurrently adhering the adhesive film to the rubber base material. The rubber base material may be either formed as a single matching profile or formed with multiple rubber sheets.

### Brief Description of the Drawings

The method and apparatus of the present invention will now be described in greater detail in the following detailed description of the invention as taken in conjunction with the following drawings, in which:
FIG. 1 schematically illustrates a present technology for forming a bottom sole of footwear;
FIG. 2 illustrates a mold structure for a preferred embodiment of the present invention using RF heating;
FIG. 2A is a view of an alternate structure for the rubber material;
FIG. 3 shows a cross-section of a further mould structure including forming a mid-sole with the bottom sole;
FIG. 4 illustrates a cross-section of still a further mold apparatus in accordance with the present invention that further employs a bladder;
FIG. 5 is a further illustration of the concepts of the present invention as applied to a boot upper;
FIG. 6 is a cross-sectional view illustrating the use of a rubber bottom sole in the form of a shell for an athletic shoe; and
FIG. 7 is a cross-sectional view illustrating the use of a rubber bottom sole in the form of a shell for a street shoe.

### Detailed Description

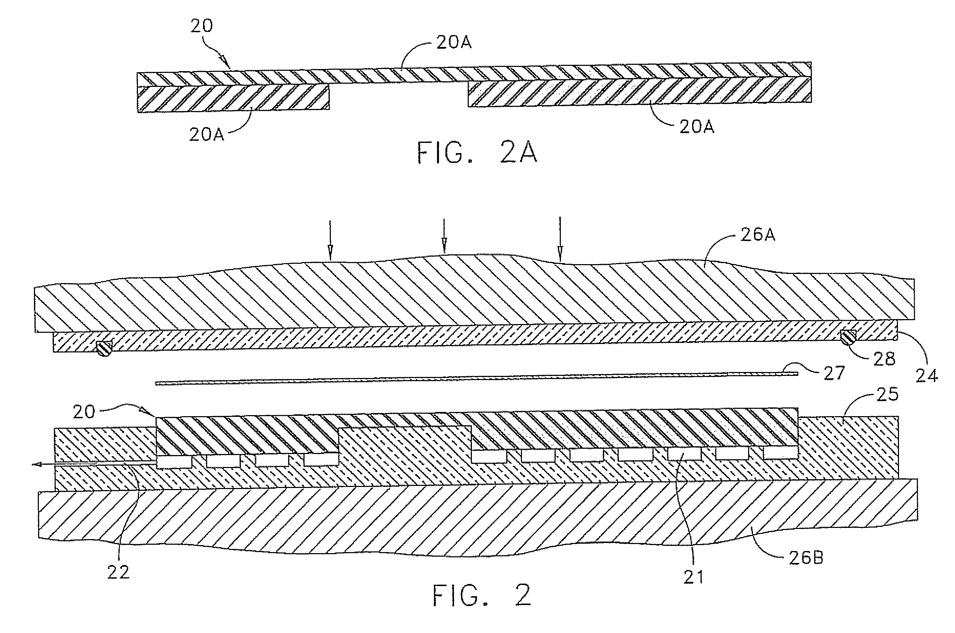

Reference is now made to the drawings for further illustrations of the principles of the present invention. Previously, mention was made of the prior art technique of providing a "hockey puck" size base material along with the use of heat and pressure to form the bottom sole. This has been found to be an inefficient process limiting the number of soles that can be outputted. Now, in accordance with the present invention the raw material, such as typically a rubber material is formed with a profile that substantially matches the profile of the mold cavity. In this regard, refer to FIGS. 2 and 2A. In FIG. 2 in particular it can be readily seen that the stepped profile of the raw material 20 is about the same as the stepped profile of the mold cavity. In FIG. 2A the raw material is shown in separate multiple layers 20A to fill the mold cavity. The number and size of layers 20A depends on the thickness of the sole in each section. FIG. 2 shows a single-piece profile that is die cut to the shape of the bottom sole. Other embodiments shown herein also are provided with raw material profiles that match the mold profile.

In accordance with the present invention the molds themselves can be constructed of either a metal material or a non-metal material. If the mold is constructed of a metal material then it is preferably provided with small venting hole 22 (see FIG. 2) to allow the air to escape during molding to obtain a proper shape with the desired details of the bottom sole. For a metal mold heat is applied along with some pressure.

A preferred molding technique in accordance with the present invention uses a flow molding process (radio frequency) heating such as is practiced in my previously issued US Patent No. 4,441,876, particularly where the mold has a non-uniform thickness. In order to provide uniform heating throughout the raw material, a constant capacitance is maintained throughout all of the different thickness sections of the part. This may be accomplished by equalizing the relative dielectric constants between the raw material and the mold, preferably by altering the relative dielectric constant of the mold via the use of additives. Alternatively, the capacitance may be equalized by modifying the spacing between the top and bottom electrodes in the different thickness sections of the part. This provides a heating at the same rate in both thin and thick sections of the bottom sole.

If RF energy is used then the molds are non metallic. For example, the mold can be made out of different materials that may be fiber reinforced such as out of silicone, epoxy, etc. The molds are not preheated. The RF dielectric heats the rubber and does not heat the mold except a small thin skin around the mold to allow curing all the way to the face of the rubber. Refer also to my earlier US Publication No. 2006/00120S2 for another example of a non-metal mold. Generally speaking non-metal molds are cheaper than metal mold and thus preferred.

Another advantage of using the RF technique is that a relatively low pressure is used as the rubber has only to conform to the mold and does not have to flow far away. This enables a speeding up of the overall molding process. The process of the present invention allows the mold to produce up to 8 pairs which are molded at once under a one minute cycle. The rubber is heated at the same rate throughout its thickness. The process of the present invention thus produces 250 to 400 pairs per hour instead of 46 to 72 pairs per hour with the prior art technique.

In accordance with the process of the present invention, another advantage is that one can readily now add a film on top of the rubber raw material of the bottom sole shape. Because the raw material profile matches that of the mold the adhesive is not broken or stretched during the vulcanizing, and thus the adhesive layer stays where it has been placed and bonds very well to the rubber during the vulcanization process. This allows polyurethane injection of the foamed midsole on top of the rubber bottom sole which bonds very well to the rubber using the polyurethane film already bonded to it.

In accordance with the present invention various types of adhesive films or layers may be used. However, the preferred film is a polyurethane film. The film can also be of polyolefin. Polyurethane is used when bonding rubber (bottom sole) to the urethane foam midsole. A coextrusion polyurethane-polyolefin may be used when bonding the rubber bottom sole to the polyethylene or EVA( Ethylene vinyl acetate) foam midsole. In other applications vinyl, polyester or polyamide films may be used. An adhesive coating on top of the rubber may also be used instead of a film form. This may be applied in any one of a number of different ways. The preferred supplier of the films is Upaco Adhesives of Nashua N.H.

Reference is now made to FIG. 2 for an illustration of one embodiment for practicing the concepts of the present invention. This shows the profile of the raw rubber material at 20 as initially placed in the mold. The mold is comprised of non-metallic mold pieces 24 and 25 that together define a mood cavity 21. The embodiment shown in FIG. 2 is meant to use RF energy for vulcanization and thus there is also included the respective electrodes 26A and 26B. In FIG. 2 the raw material is shown as die-cut to match the configuration of the mold. A film 27 is added to the rubber as a layer on top of the un-vulcanized rubber in the mold. If the rubber was already vulcanized, the film typically would not bond. FIG. 2 also shows a seal 28 that may be used if a vacuum is applied for closing the mold. The aforementioned vent hole (or holes) may also be used for the application of the vacuum.

In accordance with the present invention there are different options depending on the customer's needs. A first case is illustrated in FIG. 2 wherein only rubber with the film disposed thereon on top of the bottom sole is illustrated. This product can then be sent to the customer. The customer can then heat the film and bond the bottom sole to an upper or the customer can heat the film and bond the bottom sole to a midsole and then the upper.

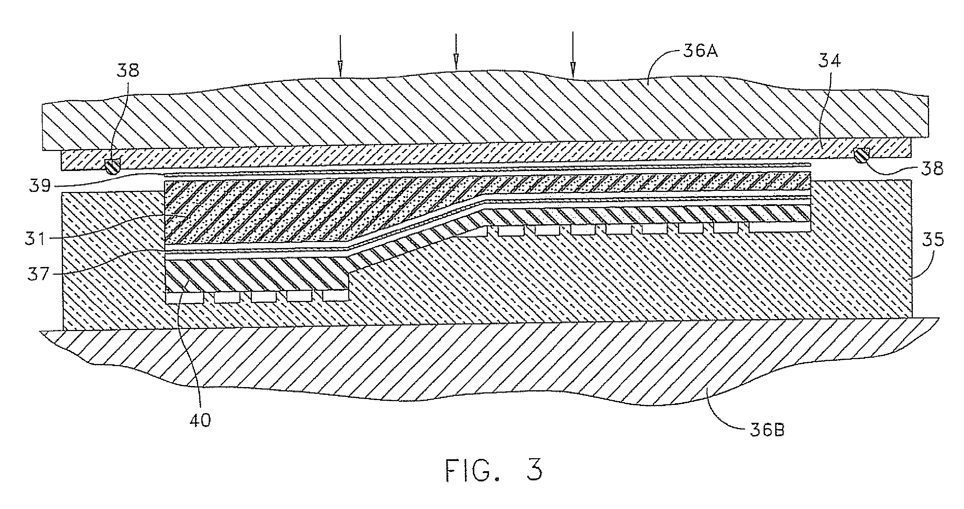

Another use of the principles of the present invention relates to the embodiment shown in FIG. 3. In this embodiment, in one step the rubber material 40 and film 37 can be molded along with the foamed midsole 31 that is pre-formed. In FIG. 3 there is disclosed the profile of the raw rubber material at 40 as initially placed in the mold. The mold is comprised of mold pieces 34 and 35 that together define a mold cavity, and that each may be non-metallic. The embodiment shown in FIG. 3 can also be considered as using RF energy for vulcanization and thus there is also included the respective electrodes 36A and 36B. In FIG. 3 the raw material is shown as die-cut to match the configuration of the mold. An adhesive film 37 is added to the rubber as a layer on top of the un-vuleanized rubber in the mold. FIG. 3 also shows a seal 38 that may be used if a vacuum is applied for closing the mold. A vent hole or holes may also be provided in the mold pieces for the application of a vacuum. FIG. 3 also illustrates the pre-formed midsole piece 31 and a further adhesive film 39 over the midsole piece.

The mold structure shown in FIG. 3 may be used in at least two different ways. In one version the process can be performed in two steps by molding the raw rubber material 40 with the adhesive film 37, as in the manner previously described using the application of RF energy. The second step is then to add the pre-formed foamed midsole material 31 on top of the film layer 37, and heating the mold again by the application of RF energy to bond the rubber bottom sole to the foam midsole 31. As shown in FIG. 3 this last step may also include the forming of the film 39 to the top of the midsole 31. Another way is to use a single step, with the sole material, mid-sole and film layers all formed together in one energy application step.

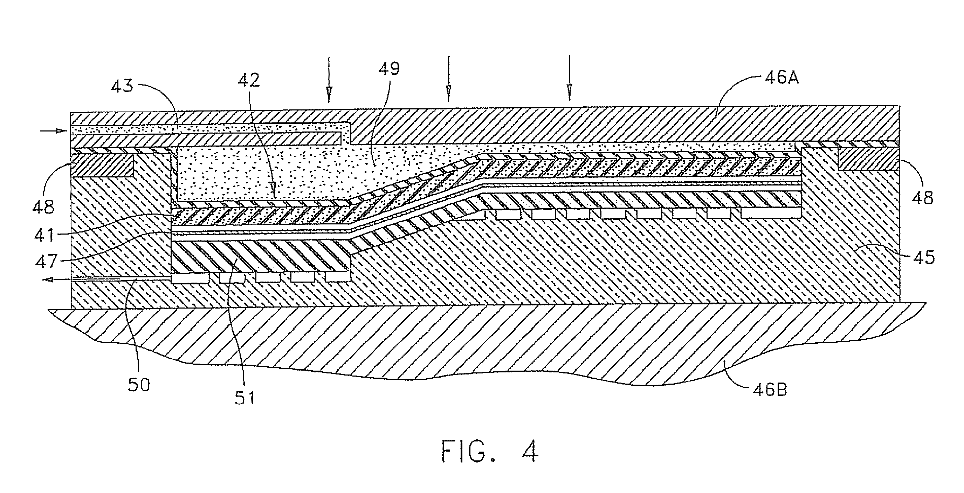

In another version of the present invention a single process step can be used with the mold structure of FIG. 4. In one step one can mold the vulcanized rubber with the film on top (which will bond to rubber) and further with the foam raw material on top which will be bonded to the rubber with the film and be blown while the rubber is vulcanized. In FIG. 4 there is disclosed the profile of the raw rubber material at 50 as initially placed in the mold. The mold is comprised, in this embodiment, of a single mold piece 45 that defines a mold cavity. The embodiment shown in FIG. 4 can also be considered as using RF energy for vulcanization and thus there is also included the respective electrodes 46A and 46B. In FIG. 4 the raw material is shown as die-cut to match the configuration of the mold. Although one particular form of material is shown, it is understood that various other shapes and configurations may be used depending on the particular sole construction that is to be formed. An adhesive film 47 is added to the rubber as a layer on top of the un-vulcanized rubber in the mold. FIG. 4 also schematically illustrates a clamp 48 that is used to clamp the bladder 42 that is used to control the blowing of the midsole material as described in more detail hereinafter. A vent hole or holes 51 may also be provided in the mold piece 45 for the application of a vacuum. FIG. 4 also illustrates the un-blown midsole material 41 under the bladder 42.

FIG. 4 depicts an initial part of the process in which the raw material 50, in a die cut pattern, is disposed in the mold covering substantially the entire bottom surface of the mold cavity of the mold piece 45. The adhesive film 47 is then applied over the raw material. An RF energy is applied between the electrodes 46A and 46B. Before applying any energy and before closing the mold, the un-blown foam material 41 is disposed in the mold over the film 47, as illustrated in FIG. 4. Actually these components are in contact but for the purpose of illustration are shown in FIG. 4 as exploded from each other. The bladder 42 is draped over the midsole foam material 42 and clamped at its edges to the mold by means of the clamp 48. FIG. 4 also shows a liquid 49 such as an oil injected into the mold cavity over the foam material. The liquid is injected through the illustrated port 43. This injection of the liquid forces the bladder 42 initially against the foam material 41, as is illustrated in the initial position of FIG. 4.

From the initial position of FIG. 4 the RF energy is then applied for the purpose of vulcanizing the raw rubber material. This bonds the film to the rubber material and the foam while causing the foam to blow and expand against the bladder 42. Heat is generated from the RF energy, the rubber is shaped to the mold and vulcanized, and the foam blows pushing against the bladder and thus pushing all the liquid 49 from the mold cavity. The upper boundary of the foam is defined by the foam expanding to the point where the bladder is forced against the inner surface of the top electrode 46A. The adhesive film, during the heating process bonds the raw rubber material and the foam together. Moreover, this all occurs essentially in a one step process.

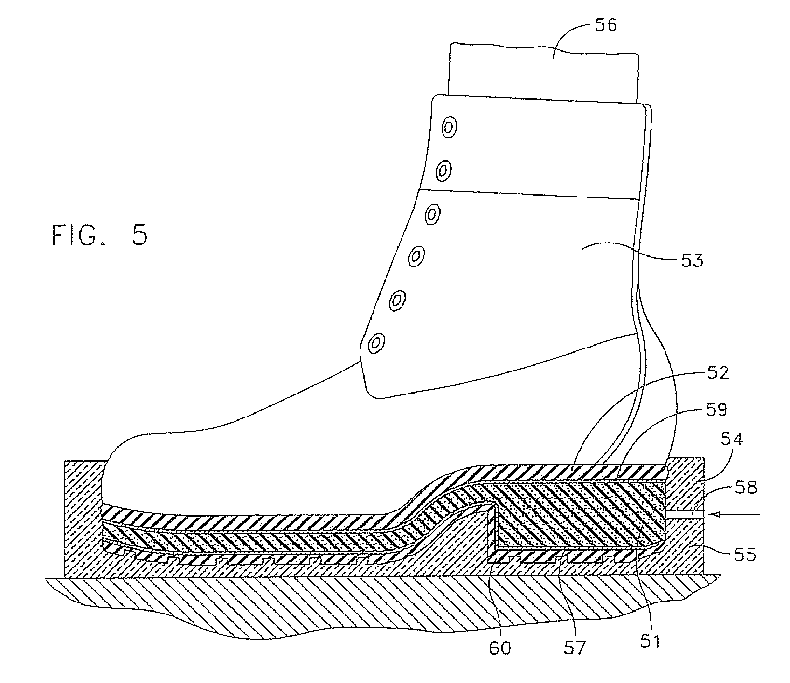

In FIG. 2 there was previously described a process step of bonding an adhesive film to the raw rubber material. FIG. 5 illustrates one of the uses of the rubber vulcanized with the film incorporated in FIG. 1. The embodiment of FIG. 5 is meant to use the earlier described step from FIG. 2 by the customer, particularly with the use of conventional injection molding machines. An advantage to this technique is that the entire shoe or boot, as illustrated in FIG. 5, can be assembled without gluing, heating, etc.

In FIG. 5 the illustrated boot can be formed in essentially a one step process. In FIG. 5 the mold is comprised of separate mold pieces 54 and 55 that together define a mold cavity. This embodiment also shows the bottom sole 60 with the film 57 previously attached and the rubber top layer 52 with a film 59 similarly previously attached thereto. The boot upper 53 with a metal last 56 inserted into the upper is disposed so that its bottom edge is attached at the top of' the mold. The bottom sole 60 with the film 57 attached thereto is placed at the bottom of a mold, leaving sufficient space over the bottom sole so that the midsole can be formed. The midsole is shown at 51 in FIG. 5. FIG. 5 shows the process near its end. Initially, before the foam is injected, of course, there is a void over the bottom sole to be filled by the injected foam. The last 56 with the upper 53(shoe or boot) is placed and locked on top of the mold. The layer 52 may be previously attached to the base of the upper 53. After attached, the mid-sole material is then injected through port 58.

After the boot or shoe upper is in place, then the forming of the midsole is accomplished. A foam material such as urethane is then injected through the port 58 into the mold cavity to make a midsole. Due to the film 57 on top of the rubber bottom sole material, the polyurethane foam midsole bonds to the rubber bottom sole. The polyurethane also bonds to the rubber layer 52 (that is molded with the film 59) that is used under the boot upper. Rubber can also possibly be injected. A machine for the injection molding operation may be the well-known "Desma" machine. This machine is made by a German manufacturer and has many stations, up to as many as 24 stations, thus allowing for an improved quantity of production.

In practicing the principles of the present invention the following prior patents or publications of mine may be used depending on the particular application. For example, US Publication No. 2006/0012083 describes a method of making a molded article from two or more formable materials in a single heating cycle, while US Publication No. 2006/0012082 describes a method of forming a hardened skin on a surface of a molded article. The principles set forth in US Publication No. 2006/0012083 can particularly be used when molding more than one plastic compound at the same time. Thus, in one step one can mold the rubber bottom sole (which will shape and vulcanize) to the EVA midsole (which will be a blowing foam from raw material containing a blowing agent), which decomposes at a certain temperature. Both materials can be brought to their respective molding temperatures, at the same time, even though the molding temperatures are different, as described in '083 publication.

In accordance with the present invention the preferred mold material is non-metallic, although the principles can be practiced with a metal mold. As mentioned previously the mold may be vented with a small hole to let the air escape such as through a hole like that shown in FIG. 2. However, with a metal mold the holes cannot be too small nor too large. If they are too large, the rubber goes into the holes and when the part is removed from the mold the rubber that seeped into the holes breaks away and stays in the hole. This causes a problem with there being no more venting and the next part molded thus has a void or a recess because the air could not escape as it should be able to. Thus, in accordance with a preferred embodiment of the present invention a non-metallic molds is used. The holes can be drilled in a very small diameter, thus allowing the air to escape without the rubber flowing into the holes due to its being too viscous.

The embodiments described herein have used primarily RF energy for vulcanizing. However, the principles of the present invention also apply to other mold constructions including both metal and non-metal molds, as well as using other energy forms including a metal mold with accompanying heat and high pressure. A vacuum mary also be used which allows molding with a heated metal mold rubber starting from sheets or a profile. This would then allow a film to be placed on top of the rubber without damaging it.

It is noted that in, for example, FIGS. 2-4 parallel electrodes have been shown. In another variation of the present invention 3-dimensional electrodes may be advantageous to use. In that case then one can use congruent electrodes, as described in my earlier US Patent No. 4,628,238. For obtaining even heating the dielectric constants of the mold and piece can be matched, as taught in my earlier US Patent No. 4,441,876. If the midsole is molded at the same time as the rubber refer to my US Publication No. 2006/0012083 that describes the matching of power factors to obtain proper heat in each piece at the same RF heating time.

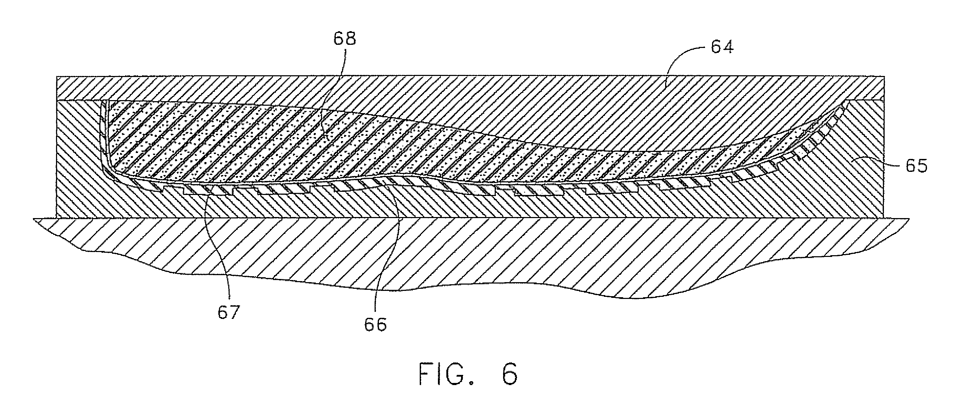

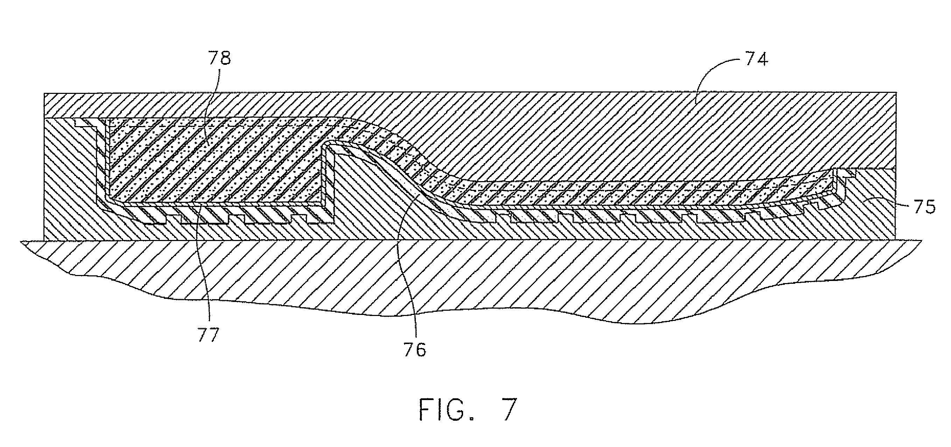

Alternate embodiments are now described that are similar to the previously described ones but, instead of a flat bottom sole, a shell of rubber is used which has a film inside that bonds to a foam just as has been described before. The same process is used in FIGS. 6 and 7 as previously described. In this way, the walls are strong and do not abrade. They are also easy to clean and have a smooth appealing finish instead of having a cell foamed material showing that can be easily scratched or that easily gets dirty.

For the athletic shoe, refer to the embodiment shown herein in the schematic diagram of FIG. 6, including mold pieces 64 and 65; sole material 66; adhesive film 67 and midsole foam material 68. The foam is preferably light in weight. A preferred material for the foam is EVA foam. The construction shown in FIG. 6 may be formed in the same manner as previously described, such as illustrated in FIGS. 3 or 4. In FIG. 6 the more vertical parts of the shell may be thinner while the bottom parts of the sole have the disclosed bumps or lugs. The thinner part may be at the heel and front of the sole.

For a regular shoe, refer to the schematic diagram of FIG. 7, including mold pieces 74 and 75; sole material 76; adhesive film 77 and midsole foam material 78. In this embodiment the foam is preferably heavier in weight than for an athletic shoe. The material for the foam may be either an EVA foam or polyurethane. In FIG. 7 the lugs of the bottom sole are also preferably thicker than for an athletic shoe. The construction shown in FIG. 7 may be formed in the same manner as previously described, such as illustrated in FIGS. 3 or 4. In this version the vertical walls are thinner, as shown, while the bottom section has substantial lugs for good wear characteristics.

Having now described certain embodiments of the present invention, it should now be apparent to those skilled in the art that numerous our embodiments and modifications thereof are contemplated as falling within the spirit and scope of the present invention. As mentioned before the use of RF energy for curing is preferred, but other types of processes can be used for the vulcanizing. Either metal or non-metal molds can be used, although a non-metal mold is preferred, in conjunction with the use of RF energy for heating and curing.

## Claims

1. A method of making a molded article comprising the steps of:
providing a mold that comprises a mold cavity;
disposing a rubber base material in the mold cavity;
said rubber base material being constructed and arranged to have a profile that substantially matches the profile of the mold cavity;
forming an adhesive layer over the rubber base material;
and applying energy across the mold so as to heat and vulcanize the rubber base material while concurrently adhering the adhesive film to the rubber base material.

2. The method according to claim 1, **characterized in that** the mold comprises two parts defining a mold cavity therebetween having a predetermined profile

3. The method of claim 1 **characterized in that** the applied energy is RF energy or the applied energy is by heat and pressure.

4. The method of claim 1 **characterized in that** the rubber material covers substantially the entire bottom side of the mold cavity, and the adhesive layer comprises a film that covers substantially the entire rubber material.

5. The method of claim 1 including providing a foam mid-sole material over the adhesive film with a blowing agent so that the foam material fills the mold cavity.

6. The method of claim 1 including disposing a bladder over the foam mid-sole material, closing the bladder against the foam material and enabling the bladder to move against the mold as the foam material expands.

7. The method of claim 1, particularly for attaching a shoe or boot upper to a sole construction by using a mold having a mold cavity, further comprising the steps of:
positioning the rubber base material in the bottom of the mold cavity where the rubber base material has an adhesive film attached thereto and
providing an upper rubber layer attached to the shoe or boot upper and also having an upper rubber layer having an adhesive film attached thereto, said respective films defining therebetween a cavity pocket, and
injecting a foam material into the cavity pocket so as to form a mid-sole.

8. The method of claim 7 including injecting a polyurethane foam into the cavity pocket.

9. The method of claim 7 including injecting the foam material into the cavity pocket between the respective films.

10. An apparatus for molding an article in which the mold includes separate mold parts that define therebetween a mold cavity having a mold profile, a pair of electrodes, one associated with each of the mold parts, an RF source coupled to the electrodes to provide RF energy across the mold cavity, a rubber base material disposed in the mold cavity with the rubber base material being constructed and arranged to substantially match the profile of the mold cavity, an adhesive film disposed over the rubber base material, the application of the energy across the mold heating and vulcanizing the rubber base material while concurrently adhering the adhesive film to the rubber base material.

11. The apparatus of claim 10 **characterized in that** the rubber material covers substantially the entire bottom side of the mold cavity.

12. The apparatus of claim 10 including providing a foam mid-sole material over the adhesive film with a blowing agent so that the foam material fills the mold cavity.

13. The apparatus of claim 11 including a bladder disposed over the foam mid-sole material, the bladder being closed against the foam material and enabling the bladder to move against the mold as the foam material expands.

14. The apparatus of claim 10 **characterized in that** the rubber base material is in the form of a shell for constructing an athletic shoe.

15. The apparatus of claim 10 **characterized in that** the rubber base material is in the form of a shell for constructing a street shoe.
